# EUROPÄISCHE PATENTSCHRIFT

(11) **EP 0 590 357 B1**
(45) Veröffentlichungstag und Bekanntmachung des Hinweises auf die Patenterteilung: **13.11.1996**
(21) Anmeldenummer: 93114237.6
(22) Anmeldetag: 06.09.1993
(51) Int. Cl.: H01M 2/12, H01M 2/04, H01M 10/52

(54) **Mehrzelliger Bleiakkumulator**
Multicell lead accumulator
Accumulateur au plomb multicellulaire

(30) Priorität: 01.10.1992 DE 4232961
(43) Veröffentlichungstag der Anmeldung: 06.04.1994
(73) Patentinhaber: VB Autobatterie GmbH, D-30419 Hannover (DE)
(72) Erfinder: Höcker, Jürgen, Dr., D-31675 Bückeburg (DE); Schulze, Klaus, Dr., D-30419 Hannover (DE); Bauer, Jürgen, Dr., D-31141 Hildesheim (DE)
(74) Vertreter: Kaiser, Dieter Ralf, Dipl.-Ing.

(56) Entgegenhaltungen:
- EP-A- 0 304 568
- EP-A- 0 443 451
- EP-A- 0 574 619
- DE-A- 1 812 518
- US-A- 4 447 508
- DATABASE WPI Week 7230, Derwent Publications Ltd., London, GB; AN 72-48854T & JP-B-47 028 135 (JAPAN STORAGE BATTERY CO) 26. Juli 1972

## Beschreibung

Die Erfindung betrifft einen mehrzelligen Bleiakkumulator mit einem Blockkastengehäuse und einem Blockdeckel sowie Trennwänden, welche den Raum innerhalb des Behälters und des Deckels in zwei oder mehrere Zellen unterteilen, wobei in dem Raum unterhalb des Deckels zur Dämpfung eines Explosionsdrucks ein poröses, kompressibles Material angeordnet ist.

Gewöhnlich besitzen Blei/Säure-Akkumulatoren einen rechteckigen, als Blockkasten bezeichneten Behälter und eine Deckelanordnung, wobei beide Teile aus einem thermoplastischen Kunststoff wie etwa Polypropylen bestehen und im Spritzgußverfahren hergestellt sind.

Der Innenraum des Behälters ist im allgemeinen mittels Trennwänden in Zellen unterteilt, und jede Zelle ist weitgehend isoliert. Innerhalb jeder Zelle sind Elektrodenstapel untergebracht und elektrisch in Serie miteinander verbunden. Außerdem ist jede Zelle mit Elektrolyt gefüllt, und zwar bis zu einer Höhe, bei der auch die Oberseite des Elektrodenstapels in den Elektrolyt eintaucht.

Beim Laden erzeugen derartige Akkumulatoren Gase, hauptsächlich Wasserstoff und Sauerstoff, die gegen Ende des Ladevorganges in der stöchiometrischen Zusammensetzung des Knallgases in einem weiten Konzentrationsbereich ein explosionsfähiges Gemisch bilden.

Bei einer Explosion des Gemisches wird nicht nur die Batterie zerstört, sondern auch ihre Umgebung in Mitleidenschaft gezogen, d.h. es können Menschen durch umherfliegende Bruchstücke aus Polypropylen verletzt werden oder, bei Kraftfahrzeugbatterien, Schäden im Motorraum angerichtet werden.

Als Auslöser für eine Explosion der Akkumulatorengase kommen sowohl äußere wie innere Zündquellen in Betracht.

Einer Zündung von außen, die durch einen Funken oder elektrostatischen Funkenüberschlag verursacht wird, kann man durch gezielte Sicherheitsmaßnahmen vorbeugen.

Eine bewährte Lösung besteht in einem Entlüftungssystem, bei welchem die Zellengase zunächst durch häufiges Umlenken an Prallflächen und in Labyrinthkammern von mitgeschleppten Feuchtigkeitsnebeln befreit und dann über eine zentrale Sammelleitung möglichst einer einzigen Ausströmöffnung im Deckelbereich zugeführt werden, die durch einen porösen Körper, z.B. eine Fritte aus gesintertem Kunststoff oder einer Keramik, verschlossen ist. Der poröse Körper verhindert die Fortpflanzung einer Stichflamme von außen nach innen und stellt damit einen Rückzündschutz dar.

Anders als wie bei den Außenzündungen entziehen sich die Ursachen für eine Innenzündung weitgehend einer Kontrolle. Die Innenzündung ist deshalb nicht beherrschbar. Sie kann verursacht werden durch eine elektrostatische Aufladung des Gehäuses. Die Ladung wird über einen Säurefilm in das Gehäuse hineintransportiert. Bei einer Unterbrechung des Säurefilms im Innern kann die damit entstandene Potentialdifferenz einen Funken auslösen, der zur Zündung des Knallgasgemisches in der Batterie führt.

Eine andere Ursache für die Entstehung eines Funkens im Batterieinnern kann in der Unterbrechung einer elektrischen Verbindung durch Korrosion oder in einer mechanischen Überbeanspruchung stromleitender Teile bestehen. Kommt es zu einer Trennung zwischen diesen, etwa durch Abkorrodieren einer Fahne oder Reißen eines Verbinders, findet bei Strombelastung der Batterie unvermeidbar ein Funkenüberschlag statt.

Es bleibt in diesem Fall nur übrig, wenigstens die Auswirkungen einer Explosion so zu mildern, daß kein größerer Schaden in der Umgebung, insbesondere an Personen, entsteht.

Aus der US-PS 2341 382 ist eine Akkumulatorenbatterie vom Blei/Säure-Typ bekannt, bei welcher der zwischen dem Elektrolytpegel und dem Gehäusedeckel verfügbare freie Raum aus dem genannten Grunde nahezu völlig mit einem regellos verteilten, gasdurchlässigen Feststoffmaterial, beispielsweise Glaswolle, angefüllt ist. Andere bekannte Vorkehrungen gemäß US-PS 4751154 und US-PS 4859546 bestehen darin, den gesamten, nach oben offenen Freiraum des Batteriebehälters mit einer Vielzahl kleiner Kissen, entweder aus Polypropylen-Wirrfasern oder aus Polyurethanschaum gebildet, in lockerer Packung auszupolstern, um auf diese Weise dank der Kompressibilitätseigenschaft einer solchen Anordnung die Wucht einer Explosion zu dämpfen.

In allen diesen Fällen ist allein das umständliche Hantieren mit dem Füllgut und seine Festlegung im Batterieinnern für einen zügigen Fertigungsfluß bei der Batterieherstellung hinderlich.

Der Erfindung liegt die Aufgabe zugrunde, eine Maßnahme anzugeben, mit deren Hilfe die angestrebte Schadensbegrenzung auf weniger aufwendige Weise erreicht werden kann.

Die Aufgabe wird erfindungsgemäß durch einen Bleiakkumulator gelöst, wie er im Patentanspruch 1 definiert ist.

Danach ist das Mittel, welches zur Abschwächung der Explosionsdruckwelle dient, eine die Unterseite des Batteriedeckels abdeckende Fasermatte, wobei jeder einzelne Deckelabschnitt, welcher mit einer Batteriezelle korrespondiert, abgedeckt ist. Zur Beschichtung des Blockdeckels einer 6-zelligen Batterie sind daher 6 einzelne Fasermatten erforderlich.

Erfindungsgemäß ergibt sich nun für solche Matten eine wesentliche Montageerleichterung dadurch, daß man sie unter Berücksichtigung der Deckelinnenkontur in einem einzigen Arbeitsgang aus dem vorgesehenen Faservliesmaterial als einstückiges Teil ausstanzt, und zwar so, daß lediglich dünne Verbindungsstreifen zwischen den einzelnen Matten verbleiben. Die Matten können dann anschließend als einstückiges Teil in den Blockdeckel eingelegt und an jedem Deckelabschnitt, welcher der darunter liegenden Zelle zugeordnet ist, befestigt werden. Dabei legen sich die dünnen Verbindungsstreifen jeweils über die Zellentrennwände.

Überraschenderweise hat sich gezeigt, daß die Verbindungsstreifen der späteren Vereinigung von Blockkasten und Blockdeckel durch den Prozeß des Spiegelverschweißens nicht im Wege stehen, sondern in die Verschweißung mit einbezogen werden können. Die Verbindungsstreifen leisten dabei zugleich eine Fixierungshilfe.

Mit Rücksicht auf die Integration der Fasermatte in das Spiegelschweißen sollte das Fasermaterial erfindungsgemäß aus dem gleichen Kunststoff wie der Batteriekasten und der Deckel des Bleiakkumulators bestehen. Zu deren Herstellung durch Spritzgießen werden gewöhnlich Polyolefine, insbesondere Polypropylen, verwendet. Es kommen jedoch auch Verbundfasern, z.B. von Polypropylen und Polystyrol, für die Matten in Betracht.

Die Faserstärke sollte erfindungsgemäß sehr gering sein und zwischen 10 und 100µm, vorzugweise zwischen 20 und 50µm liegen. Die Feinheit der Fasern (früher in Denier-Graden gemessen) sollte 1,5 bis 40dtex betragen, und es sollte sich dabei erfindungsgemäß ein Flächengewicht des Fasermaterials zwischen 120 bis 350g/m² ergeben.

Sehr günstig ist auch eine Teilhydrophobierung, zu der man gelangt, indem man bei der Herstellung der Matten bzw. Faservliese hydrophobierte Fasern mit nicht hydrophobierten mischt. Hydrophorbierte Fasern durchlaufen bereits beim Verspinnen ein hydrophobierendes Medium, z.B. eine PTFE-Dispersion, und können direkt im Handel bezogen werden. Auch nichthydrophobierte Fasern können in Form der gestanzten Matte durch Besprühen oder Tränken mit einer PTFE-Dispersion nachbehandelt werden.

Der Grad der Teilhydrophobierung der Matte ergibt sich aus dem Mischungsverhältnis zwischen hydrophobierten und nicht hydrophobierten Fasern, bzw. aus der Konzentration der eingesetzten PTFE-Dispersion.

Durch den teilhydrophoben Zustand der Matten ist sichergestellt, daß sie vom Elektrolyten nur zu einem bestimmten Prozentsatz benetzbar sind. Dies hat den Effekt, daß sie einerseits als Ganzes die Explosionsdruckwelle auffangen, andererseits durch die Teilbenetzung des Vliesgewebes für eine Wärmeableitung der mit der Druckerhöhung einhergehenden Temperaturwelle sorgen.

Erfindungsgemäß geht von der Fasermatte im Explosionsfalle eine Federwirkung aus, die sich durch Zusammendrücken der Fasern äußert. Zur Unterstützung der Federwirkung ist es günstig, die Vliesmatten mehrlagig zu applizieren und ggfls. auch Netzarmierungen in diese einzubeziehen.

Die Dicke der Matten bzw. die mit ihnen vorgenommene Beschichtung der Deckelunterseite sollte mindestens 7 bis 20mm betragen.

Zusätzliche Maßnahmen, mit denen die Brisanz einer Batterieexplosion gemildert werden kann, erstrecken sich auf den Deckel selbst. Hierbei sollte z.B. eine Polypropylensorte hoher Schlagfestigkeit, besonders in der Kälte, ausgewählt werden.

Wichtig ist auch, daß der Kunststoff eine der Verformungsenergie angepaßte Elastizität besitzt, damit die Energie der Explosionsdruckwelle in eine elastische Materialumformung umgesetzt wird.

Weitere Möglichkeiten liegen in der konstruktiven Einfügung von Verstärkungselementen in die Deckelschale, z.B. von Bandzügen, d.h. von Verstärkungsbändern in Form von senkrecht zur Deckelebene orientierten Leisten.

Schließlich können ein aus einem Verbundwerkstoff hergestellter Deckel (mehrere Schichten) oder eine Beschichtung des Deckels von der Oberseite mit einer elastischen Folie oder einem elastisch erstarrenden Auftrag, um Splitterwirkung weitgehend auszuschalten, die Maßnahme gemäß Erfindung nachhaltig unterstützen.

Die vorliegende Erfindung steigert auch die Betriebssicherheit von Akkumulatorenbatterien mit Entlüftungseinrichtungen, welche mittels einer Flammschutzfritte im zentralen Gasausgang bereits gegen Explosionen durch Außenzündunge geschützt sind.

Zur Veranschaulichung des Gegenstandes der Erfindung zeigt eine Figur ein Batteriegehäuse 1 mit sechs Zellen, den zugehörigen Blockdeckel 2 sowie eine erfindungsgemäße, in einem Stück zugeschnitte Fasermatte 3. Die Batteriezellen sind mit Plattenpaketen einschließlich Separatoren, Zellenverbindern, Polbrücken mit Endpolen etc. bereits fertig bestückt. Auf ihre Darstellung wurde hier aus Einfachheitsgründen verzichtet.

Die Fasermatte setzt sich entsprechend der Zellenzahl aus Abschnitten 4 zusammen, die über dünne Streifen 5 zusammenhängen. In die Abschnitte 4 eingestanzte Löcher 6 tragen den Einfüllöffnungen 7 im Deckel 2 Rechnung, die sich im Deckelinnern als Rohrstutzen (nicht sichtbar) fortsetzen. Mit Löchern 8 in den beiden Endabschnitten sind die Durchführungen 9 der Endpole durch den Deckel berücksichtigt.

Zur Montage wird auf die Deckelunterseite zunächst ein Schmelzkleber aufgetragen, und sodann werden die Mattenabschnitte, den Pfeilen folgend, in die vorgesehenen Deckelräume, die mit den Zellräumen des Behälters korrespondieren, eingelegt und leicht angedrückt.

Die Mattenabschnitte bleiben dabei durch die Verbindungsstreifen, welche sich über die Stege 10' alsFortsetzung der Zellentrennwände 10 hinweglegen, untereinander verbunden.

Es bleibt der Praxis überlassen, auch die Seiten der Stege 10' mit dem Schmelzkleber zu bestreichen und mit der Fasermatte zu überziehen. In diesem Falle ist der Zuschnitt der Mattenabschnitte 4 entsprechend breiter, derjenige der Verbindungsstreifen 5 kürzer bzw. schmaler.

Die Befestigung der Fasermatte am Deckel kann aber auch statt durch Kleben auf thermischem Wege, z.B. durch Spiegelschweißen oder Ultraschallschweißen, erfolgen. Eine Fixierung mittels Fangkörbchen an der Deckelunterseite ist ebenfalls möglich.

Durch die nunmehr folgende Spiegelverschweißung von Behälter und Deckel werden die dünnen Verbindungsstreifen in die Fusionszone der Gehäuse- und Deckelwände fest eingebunden.

Die erfindungsgemäße Maßnahme macht keinerlei Veränderungen an den üblichen technischen Einrichtungen für das Spiegelschweißen und der bisherigen Arbeitsweise erforderlich.

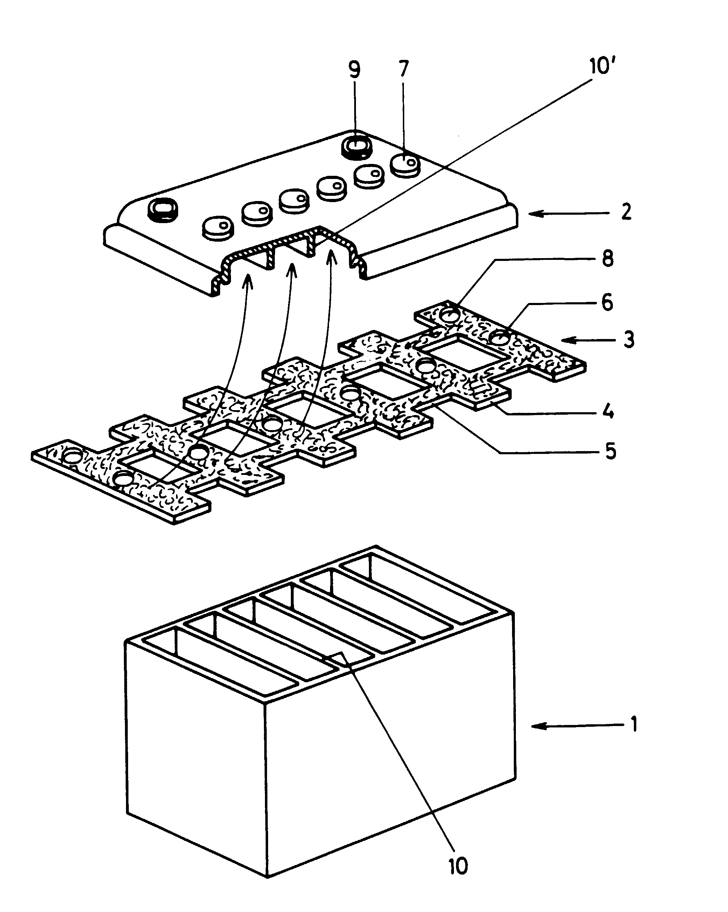

## Patentansprüche

1. Mehrzelliger Bleiakkumulator mit einem Blockkastengehäuse und einem Blockdeckel sowie Trennwänden, welche den Raum innerhalb des Behälters und des Deckels in zwei oder mehr Zellen unterteilen, wobei in dem Raum unterhalb des Deckels zur Dämpfung eines Explosionsdrucks ein poröses, kompressibles Material angeordnet ist, dadurch gekennzeichnet, daß das Material ein Faservlies ist, welches in Form einer Fasermatte (3) die gesamte Unterseite eines jeden einer Zelle zugeordneten Deckelausschnitts abdeckt, wobei sämtliche Einzelmatten (4) vor dem Einsetzen in den Deckel durch dünne Verbindungsstreifen (5) miteinander verbunden sind.

2. Mehrzelliger Bleiakkumulator nach Anspruch 1, dadurch gekennzeichnet, daß das Vliesmaterial aus dem gleichen Kunststoff wie das Akkumulatorgehäuse gebildet ist und daß die Verbindungsstreifen, welche die Zellentrennwände übergreifen, in die Spiegelverschweißung von Blockkasten und Blockdeckel mit einbezogen sind.

3. Mehrzelliger Bleiakkumulator nach Anspruch 2, dadurch gekennzeichnet, daß die über dünne Streifen miteinander verbundenen Fasermatten von einem einzigen Stanzteil entsprechend der Blockdeckel-Innenkontur gebildet sind.

4. Mehrzelliger Bleiakkumulator nach einem der Ansprüche 1 bis 3, dadurch gekennzeichnet, daß der Kunststoff des Vliesmaterials ein Polyolefin, vorzugsweise Polypropylen ist.

5. Mehrzelliger Bleiakkumulator nach einem der Ansprüche 1 bis 4, dadurch gekennzeichnet, daß die Dicke der Fasern 10 bis 100µm, vorzugsweise 20 bis 50µm beträgt.

6. Mehrzelliger Bleiakkumulator nach einem der Ansprüche 1 bis 5, dadurch gekennzeichnet, daß bei einer Feinheit der Fasern von 1,5 bis 40dtex das Flächengewicht des Fasermaterials 120 bis 350g/m² beträgt.

7. Mehrzelliger Bleiakkumulator nach einem der Ansprüche 1 bis 6, dadurch gekennzeichnet, daß das Vliesmaterial teilhydrophobiert ist.

8. Mehrzelliger Bleiakkumulator nach einem der Ansprüche 1 bis 7, dadurch gekennzeichnet, daß die Vliesmatte an der Deckelunterseite durch thermische Verfahren wie Spiegelschweißen oder Ultraschallschweißen oder mittels Schmelzkleber befestigt ist.

9. Mehrzelliger Bleiakkumulator nach einem der Ansprüche 1 bis 8, dadurch gekennzeichnet, daß die Matten-Beschichtung der Deckelunterseite eine Mindestdicke von 7 bis 20mm aufweist.

10. Mehrzelliger Bleiakkumulator nach einem der Ansprüche 1 bis 9, dadurch gekennzeichnet, daß er eine mittels Flammschutzfritte explosionsgeschützte Entlüftungseinrichtung besitzt.

## Claims

1. A multi-cell lead accumulator having a monoblock container housing and a block cover and separating walls which divide the space within the container and the cover into two or more cells, a porous compressible material being arranged in the space below the cover, for absorbing the pressure of an explosion, characterized in that the material is a fibrous fleece which, in the form of a fibre mat (3), covers the entire underside of each cover section associated with a cell, all the individual mats (4) being connected to one another by thin connecting strips (5) before they are set into the cover.

2. A multi-cell lead accumulator according to Claim 1, characterized in that the fleece material is formed from the same synthetic material as the accumulator housing, and in that the connecting strips, which reach over the cell separating walls, are included in the butt-welding of the monoblock container and the block cover.

3. A multi-cell lead accumulator according to Claim 2, characterized in that the fibre mats connected to one another by thin strips are formed from a single punched part corresponding to the internal contour of the block cover.

4. A multi-cell lead accumulator according to one of Claims 1 to 3, characterized in that the synthetic material of the fleece material is a polyolefin, preferably polypropylene.

5. A multi-cell lead accumulator according to one of Claims 1 to 4, characterized in that the fibres have a thickness of 10 to 100 µm, preferably 20 to 50 µm.

6. A multi-cell lead accumulator according to one of Claims 1 to 5, characterized in that when the fibres have a fineness of 1.5 to 40 dtex the mass per unit area of the fibre material is 120 to 350 g/m².

7. A multi-cell lead accumulator according to one of Claims 1 to 6, characterized in that the fleece material is made partially water-repellant.

8. A multi-cell lead accumulator according to one of Claims 1 to 7, characterized in that the fleece mat is secured to the cover underside by thermal processes such as butt-welding or ultrasonic welding, or by means of hot-melt adhesives.

9. A multi-cell lead accumulator according to one of Claims 1 to 8, characterized in that the mat coating of the cover underside has a minimum thickness of 7 to 20 mm.

10. A multi-cell lead accumulator according to one of Claims 1 to 9, characterized in that it has a venting means which is protected from explosion by means of a flame protection frit.

## Revendications

1. Accumulateur au plomb à plusieurs cellules, comprenant un boîtier en forme de bac monobloc et un couvercle ainsi que des cloisons subdivisant le volume du bac et du couvercle en deux ou plusieurs cellules, le volume sous le couvercle recevant une matière comprimable, poreuse, pour atténuer la pression d'une explosion,
caractérisé en ce que
la matière est un non tissé de fibres sous la forme d'une nappe de fibres (3) recouvrant toute la face inférieure de chaque segment de couvercle associé à une cellule, et toutes les nappes séparées (4) sont reliées par de minces bandes de liaison (5) avant leur mise en place dans le couvercle.

2. Accumulateur au plomb à plusieurs cellules selon la revendication 1,
caractérisé en ce que
la matière non tissée est fabriquée dans la même matière plastique que le boîtier de l'accumulateur et les bandes de liaison, qui passent par-dessus les cloisons des cellules sont intégrées au bac et au couvercle du boîtier lors du soudage en bout à l'aide de réflecteurs.

3. Accumulateur au plomb à plusieurs cellules selon la revendication 2,
caractérisé en ce que
les nappes de fibres reliées par les minces bandes sont formées d'une seule pièce estampée suivant le contour intérieur du couvercle du boîtier.

4. Accumulateur au plomb à plusieurs cellules selon l'une des revendications 1 à 3,
caractérisé en ce que
la matière plastique constituant la matière des fibres est une polyoléfine, de préférence du polypropylène.

5. Accumulateur au plomb à plusieurs cellules selon l'une des revendications 1 à 4,
caractérisé en ce que
l'épaisseur des fibres est comprise entre 10 et 100 µm et de préférence entre 20 et 50 µm.

6. Accumulateur au plomb à plusieurs cellules selon l'une des revendications 1 à 5,
caractérisé en ce que
pour une finesse des fibres comprise entre 1,5 et 40 dtex, le grammage de la matière des fibres est compris entre 120 et 350 g/m².

7. Accumulateur au plomb à plusieurs cellules selon l'une des revendications 1 à 6,
caractérisé en ce que
la matière non tissée est partiellement hydrophobe.

8. Accumulateur au plomb à plusieurs cellules selon l'une des revendications 1 à 7,
caractérisé en ce que
la nappe non tissée est fixée contre la face inférieure du couvercle par un procédé thermique tel qu'un soudage en bout à l'aide de réflecteurs ou un soudage aux ultrasons ou encore avec une colle fusible.

9. Accumulateur au plomb à plusieurs cellules selon l'une des revendications 1 à 8,
caractérisé en ce que
le revêtement avec la nappe pour la face inférieure du couvercle présente une épaisseur minimale comprise entre 7 et 20 mm.

10. Accumulateur au plomb à plusieurs cellules selon l'une des revendications 1 à 9,
caractérisé par
une installation de ventilation protégée contre les explosions par une fritte de protection contre les flammes.
